# FASCICULE DE BREVET EUROPEEN

(11) **EP 2 758 657 B1**
(45) Date de publication et mention de la délivrance du brevet: **15.11.2017**
(21) Numéro de dépôt: 12759159.2
(22) Date de dépôt: 18.09.2012
(51) Int. Cl.: F03D 1/06

(54) **DISPOSITIF DE LIAISON DE TRONÇONS D'AILES ET PROCÉDÉ D'ASSEMBLAGE DE TELS TRONÇONS**
VORRICHTUNG ZUR VERBINDUNG VON FLÜGELABSCHNITTEN UND MONTAGEVERFAHREN FÜR SOLCHE ABSCHNITTE
DEVICE FOR THE CONNECTION OF SECTIONS OF WINGS AND ASSEMBLY METHOD OF SUCH SECTIONS

(30) Priorité: 20.09.2011 FR 1158357
(43) Date de publication de la demande: 30.07.2014
(73) Titulaire: Airbus Safran Launchers SAS, 92130 Issy-les-Moulineaux (FR)
(72) Inventeur: CUSSAC, David, 33160 Saint Medard En Jalles (FR); HUMBLOT, Antoine, 33160 Saint Medard En Jalles (FR)
(74) Mandataire: Ipside
(86) Numéro de dépôt international: PCT/EP2012/068285
(87) Numéro de publication internationale: WO 2013/041498

(56) Documents cités:
- WO-A2-2010/023299
- ES-A2- 2 089 965
- US-A1- 2009 226 320
- US-A1- 2010 122 442

## Description

La présente invention concerne la technologie des liaisons mécaniques des pièces structurales en matériaux composites et les dispositifs d'assemblage de telles pièces et en particulier de tronçons d'ailes ou de pales. Un cas particulier d'application de cette invention est celui des pales d'éoliennes.

On conçoit aujourd'hui des éoliennes dont les pales atteignent plusieurs dizaines de mètres. De telles pales posent évidemment de nombreux problèmes techniques, mais également logistiques. Le transport terrestre ou maritime de ces structures peut s'avérer problématique, surtout si l'accessibilité de la zone d'implantation est difficile. Du point de vue technique, l'utilisation de matériaux composites permet d'alléger les pales et donc de diminuer les efforts sur la structure entière de l'éolienne (pale/mât/fondations). Du point de vue logistique, l'assemblage de tronçons de pales sur site permet de réduire la criticité et le coût des phases de transport.

Se pose donc le problème de l'assemblage de pièces en matériaux composites, dans une perspective de solution mécaniquement optimisée en termes de masse, de coût, et de simplicité.

On constatera qu'il existe deux grandes familles de procédés de liaison :
- les procédés par collage, qui peuvent éventuellement inclure des fibres ou des tissus, dont la technologie se rapproche alors de celle de l'élaboration des matériaux composites ; L'inconvénient majeur des liaisons collées réside dans le fait qu'elles sont indémontables.
- les procédés mécaniques, permettant le démontage des liaisons. On retrouve ces procédés mécaniques par exemple dans les documents EP 1 584 817, EP 1 878 915 et EP 1 244 873.

Dans tous les cas, la liaison est faite par des pièces métalliques qui sont elles mêmes fixées sur la structure de la pale composite.

Une des caractéristiques communes aux documents EP 1 584 817, EP 1878 915, et EP 1 244 873 est que la liaison est assurée par plusieurs pièces métalliques, chacune fixée sur le composite de manière discontinue par des fixations mécaniques (vis, pions).

Ces solutions ne permettent toutefois pas d'assurer un passage d'effort homogène sur toute la paroi composite ce qui génère des sur-flux locaux entrainant un manque d'optimisation de la structure.

Un risque de rupture progressive s'amorçant sur les zones les plus contraintes, phénomène de déboutonnage peut dans ce cas exister.

De plus, au niveau analyse mécanique, ces surflux locaux sont difficiles à quantifier, ce qui pénalise la fiabilité et l'optimisation de la structure. Et donc la liaison réalisée est difficile à garantir.

A noter également que EP 1878 915 décrit une liaison qui concerne la peau de la pale dans son ensemble, alors que dans les concepts avancés, la pale comporte un caisson central qui porte les efforts, et sur lequel se reprennent les liaisons. Le document US 2010/0122442 A1 décrit un dispositif de jonction de tronçons de pales pour lequel une bride centrale est découpée en deux plaques de jonction boulonnées l'une à l'autre pour solidariser les pales. Une telle réalisation ne transfère pas correctement les efforts de torsion des pales au niveau de la jonction entre les tronçons. Le document FR 2 948 154 au nom de la demanderesse concerne l'assemblage de tronçons de pales d'éoliennes et prévoit une liaison piontée à au moins double cisaillement, la liaison entre le métal et le composite utilise une ferrure continue par coté ou un cadre continu et fermé, pour assurer le passage des efforts dans la structure du longeron de la pale, l'ensemble de la liaison y compris les éléments de fixation se trouve à l'intérieur du profil aérodynamique de la pale.

Cette liaison démontable est une adaptation des liaisons mécaniques issues du domaine spatial. Elle met en jeu des cadres métalliques complexes et donc coûteux. Ce type de liaison est particulièrement adapté aux pales de très grandes dimensions pour lesquelles les sollicitations sont très importantes. Cette solution implique de percer la semelle de la pale, et donc de la renforcer avec des plis supplémentaires. La liaison double cisaillement implique aussi un désalignement de la fibre neutre de la semelle nécessaire pour assurer la continuité du profil aérodynamique. Un capot doit également être prévu pour recouvrir cette zone de liaison.

Par rapport à l'art antérieur, les objectifs de la présente invention sont de réaliser une liaison à coût et masse optimisés, par collage et assemblage mécanique, sans perçage ni désalignement de la semelle, démontable, avec un procédé d'assemblage simplifié sur site et assurant la continuité du profil aérodynamique sans ajout de capot.

Pour ce faire, la solution que propose la présente invention repose sur les principes suivants: les tronçons de la pale sont assemblés via des caissons composites collés entre les peaux de chacun des tronçons et un réseau de tirants, le serrage de ces tirants sur des nervures métalliques éventuellement via des trappes d'accès dans les peaux met en compression les caissons. Les caissons sont assimilables à des entretoises.

Plus précisément la présente invention propose un dispositif de liaison de tronçons d'ailes telles que des pales d'éoliennes qui comporte, aux extrémités des tronçons en regard, des caissons centraux mis bout à bout et serrés l'un contre l'autre par des tiges de serrage.

Les efforts de serrage sollicitent les tiges de serrage en traction et les caissons en compression. Les efforts de flexion transitent par les liaisons collées entre les caissons et les peaux. Les efforts tranchants transitent par des longerons des caissons.

Avantageusement, chacun des caissons est pourvu d'une boîte de liaison tubulaire et de plaques d'appui entre lesquelles est reçue la boîte de liaison.

Préférablement, les tiges de serrage traversent les boîtes de liaison, les plaques d'appui étant munies de trous de passage des tiges de serrage.

Avantageusement, les tiges forment un réseau de tirants, le serrage de ces tirants sur les plaques d'appui mettant en compression les boîtes de liaison.

Selon un mode de réalisation particulier de l'invention, les plaques d'appui sont conformées en nervures des tronçons d'ailes.

Avantageusement, les caissons forment des entretoises des tronçons.

Selon un mode de réalisation particulier, les boîtes de liaison tubulaires comportent des longerons et des traverses collés ensemble sur des blocs de fermeture des boîtes de liaison, lesdits blocs formant, avec des plaques externes rigides, lesdites plaques d'appui.

Selon un mode de réalisation particulier, les longerons sont des longerons composites de masse réduite.

Les traverses des caissons sont préférablement des éléments de semelles des tronçons.

L'invention concerne en outre une aile telle qu'une pale d'éolienne en plusieurs tronçons qui comporte au moins un dispositif de liaison selon l'invention.

Le dispositif étant tel que les traverses des caissons sont des éléments de semelles des tronçons, les peaux des intrados et extrados des tronçons de l'aile sont avantageusement collées sur les semelles des tronçons.

L'aile peut avantageusement être telle que les tronçons comportent au moins une poutre en I en prolongement des caissons du dispositif de liaison.

L'invention concerne en outre un procédé de réalisation de tronçons d'ailes telles que des pales d'éoliennes qui comporte une étape de réalisation de dispositifs de liaison desdits tronçon sous forme de caissons centraux de jonction.

Préférablement, on fabrique chacun des caissons à partir d'une boîte de liaison tubulaire et de plaques d'appui entre lesquelles est reçu la boîte de liaison tubulaire.

Le procédé comporte préférablement une étape de perçage de trous de passage de tiges de serrage dans les plaques d'appui et une étape de pose de tubes de réception des tiges de serrage entre les plaques d'appui.

Le procédé comporte avantageusement une étape de collage de longerons des boîtes de liaison sur des blocs de fermeture des boîtes et de collage de traverses formant des semelles des caissons.

Selon un mode de réalisation particulier, le procédé comporte une étape de mise bout à bout des dispositifs de liaison, les premières plaques d'appui étant mise en appui contre une cale centrale, une étape d'insertion des tiges et de mise en compression des caissons par des moyens de serrage en bout des tiges.

Avantageusement, on réalise les plaques d'appui par assemblage de plaques externes rigides avec les blocs de fermeture des boîtes.

Le procédé comporte avantageusement une étape de collage d'une première peau formant un premier des intrado ou extrado du tronçon de l'aile sur le dispositif de liaison et de collage de la première peau sur une première semelle assemblée avec un longeron d'une poutre et une étape de collage d'une seconde peau formant le second des intrado ou extrado du tronçon de l'aile sur le dispositif de liaison, sur la première peau et sur une seconde semelle collée sur le longeron, les première et seconde semelles et le longeron formant un élément de poutre de l'aile.

Avantageusement, le procédé comporte ensuite une étape de polymérisation de l'aile dans un moule.

Préférablement, le procédé comporte un étape ultérieure de démontage des tiges et de séparation des tronçons par découpe de la cale entre les premières plaques d'appui pour stockage et transport des tronçons séparés.

L'invention concerne enfin un procédé d'assemblage de tronçons d'ailes réalisés selon le procédé de réalisation des tronçons de l'invention et qui comporte un étape de mise bout à bout des tronçons au niveau des dispositifs de liaison, insertion de tiges de serrage dans les plaques d'appui des dispositifs de liaison et serrage des tiges par des écrous en bout des tiges.

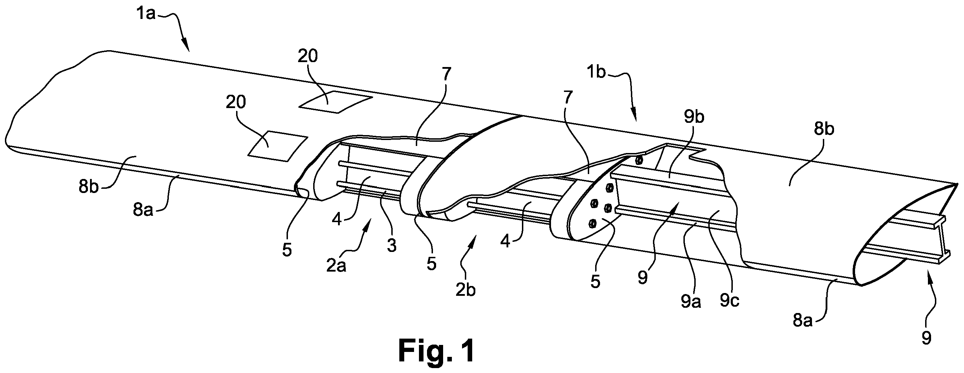

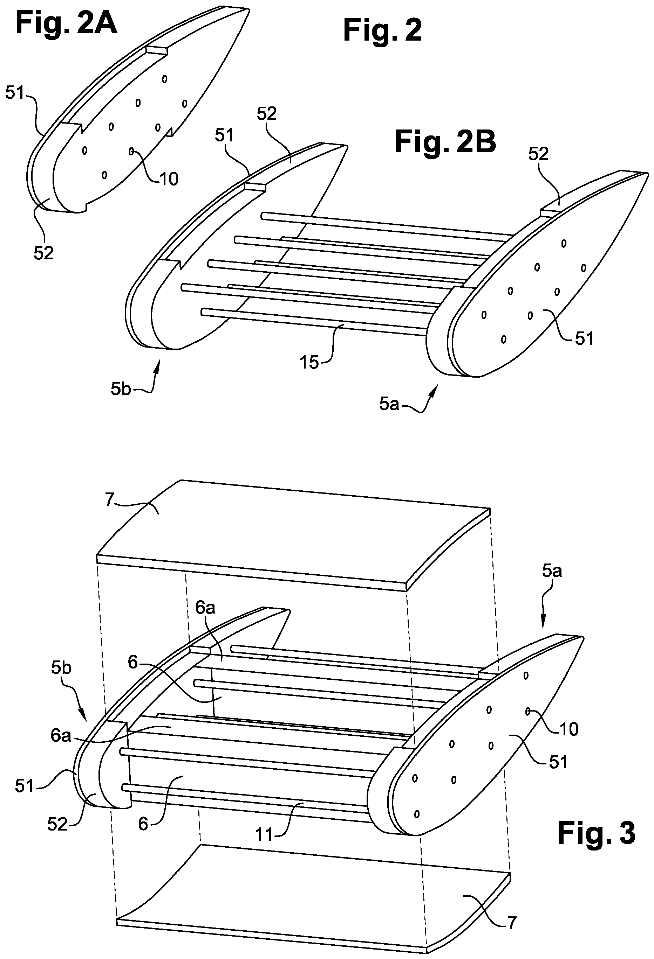

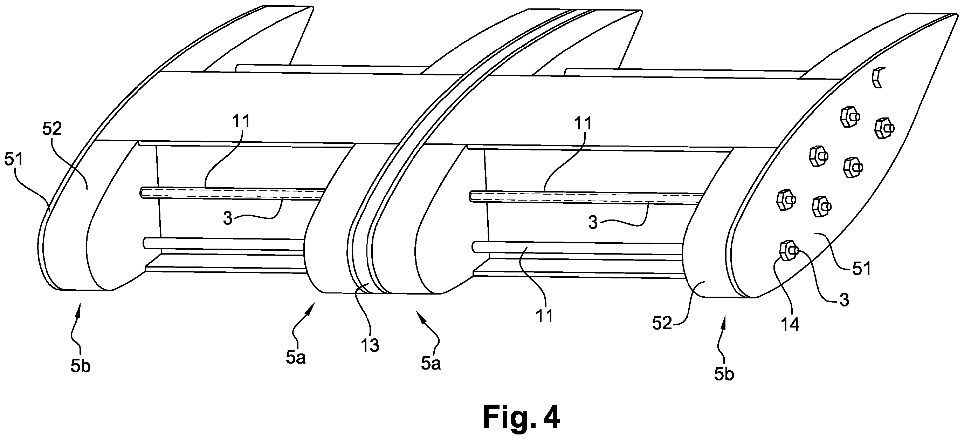

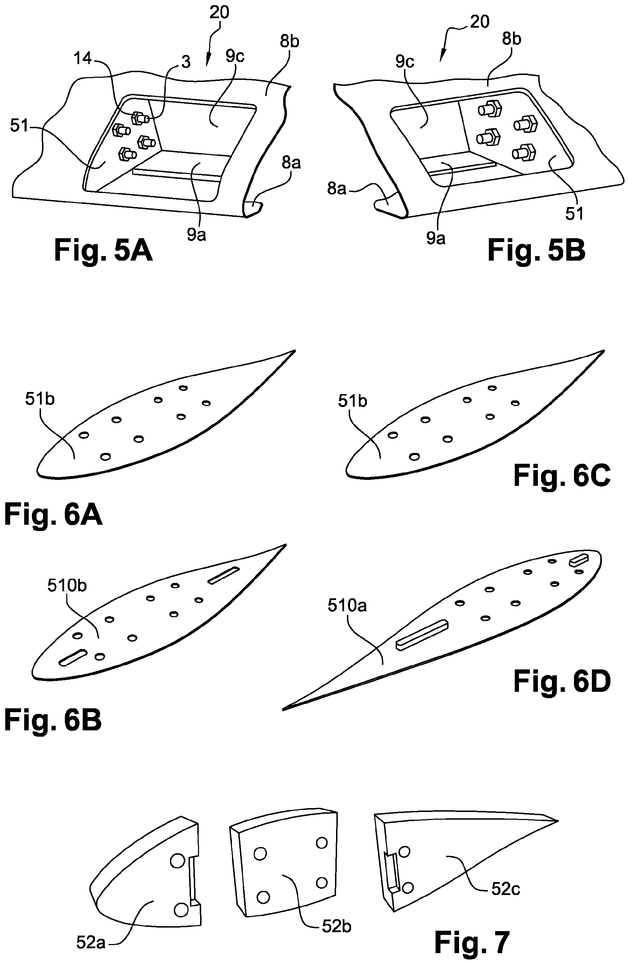

D'autres caractéristiques et avantages de l'invention seront apparentes à la lecture de la description qui suit d'un exemple de réalisation non limitatif de l'invention en référence aux dessins qui représentent:
en figure 1 : une vue d'ensemble en perspective avec éclaté d'une portion d'aile comportant le dispositif de l'invention
aux figures 2A et 2B: des vues en perspective de premières étapes de réalisation d'un caisson selon l'invention;
en figure 3: une vue en perspective d'une deuxième étape de réalisation d'une caisson selon l'invention;
en figure 4: une vue en perspective de caissons de deux tronçons assemblés;
aux figures 5A et 5B: deux vues de détail de trous de visite donnant accès aux tiges de serrage de caissons selon l'invention;
aux figures 6A à 6C: des vues en perspectives de plaques externes des caissons de la figure 4;
en figure 7: une vue en perspective d'un exemple de réalisation d'un bloc de fermeture selon un mode de réalisation de l'invention.

La figure 1 représente une portion d'aile à deux tronçons réalisée selon l'invention.

L'aile, ici une pale d'éolienne comporte un dispositif de liaison des tronçons 1a, 1b qui comporte, aux extrémités des tronçons en regard, des caissons centraux 2a, 2b de jonction mis bout à bout et serrés l'un contre l'autre par des tiges de serrage 3, chacun des caissons étant pourvu d'une boîte de liaison tubulaire 4 et de plaques d'appui 5 entre lesquelles est reçu la boîte de liaison 4.

Les tronçons comportent des peaux 8a, 8b formant l'intrado et l'extrado de l'aile et des trappes 20 d'accès aux tiges de serrage des caissons.

Les caissons 2a, 2b forment des entretoises des tronçons. qui comportent chacun une poutre 9 formée d'un longeron 9c et de deux semelles 9a, 9b.

On appelle semelle toute pièce longitudinale sur laquelle est collée la peau.

Les plaques d'appui 5 forment des nervures de l'aile dans la zone de jonction entre les tronçons.

Les poutres 9 sont fixées sur les nervures 5 par collage ou par des éclisses comme des pattes en L.

Selon la figure 2A, on réalise les plaques d'appui par assemblage de plaques externes rigides 51 avec des blocs 52 de fermeture des boîtes de liaison tubulaires.

Les blocs épousant le profil des plaques externes pour que l'ensemble plaques externes et bloc forment des nervures des tronçons d'ailes 1a, 1b.

Les plaques d'appui sont munies de trous 10 de passage de tiges de serrage.

Les trous peuvent être réalisés sur les plaques externes et les blocs de fermeture séparés.

Selon la figure 2B, on dispose des tubes 15 de réception des tiges de serrage entre les plaques d'appui.

es tubes 15 de guidage et de positionnement des tiges 3 peuvent être non structuraux et réalisés par exemple en PVC.

Les trous réalisés dans les plaques externes rigides 51 sont plus petits que le diamètre externe des tubes alors que les trous réalisés dans les blocs 52 sont de diamètre suffisant pour laisser passer les tubes 15 de sorte que l'on obtienne un assemblage suffisamment résistant pour manipuler l'ensemble plaques d'appui et tubes.

Les plaques externes sont métalliques par exemple en acier. On peut en compter quatre, positionnés de part et d'autre de chacun des deux caissons centraux de jonction. Les deux tronçons de pale à assembler sont en contact au niveau des flasques métalliques terminant les caissons et les tronçons.

Selon l'exemple des figures 6B et 6D, les deux plaques externes situées au niveau de la liaison entre les tronçons sont spécifiques: l'une 510a comporte au moins deux pions de centrage tandis que l'autre 510b comporte au moins deux perçages dans lesquels les pions du premier flasque viennent se loger.

Selon l'exemple des figures 6A et 6C, les plaques externes 51 extérieures sont planes.

Afin d'éviter de rendre la liaison hyperstatique, les perçages destinés aux tiges sont dimensionnés pour permettre un certain jeu de positionnement des tiges.

Les blocs 52 de fermeture des boîtes de liaison sont avantageusement réalisés en mousse PVC, PS, PU ou en balsa et ont la forme du profil aérodynamique de la pale. Ils peuvent être soit monobloc, soit dissociés en trois parties: bord d'attaque, caisson central et bord de fuite comme représenté à la figure 7.

Ces blocs de fermeture ont plusieurs fonctions : ils servent de plages de collage lors de la fermeture de l'intrados sur l'extrados, forment des logements pour positionner les tubes 15 de guidage des tirants et referment les boîtes de liaison comme il sera vu ci-dessous.

La figure 3 représente la réalisation des boîtes de liaison.

Les boîtes de liaison 4 comportent des longerons 6 et des traverses 7 collés ensemble sur les blocs 52 de fermeture des boîtes de liaison.

Le procédé de réalisation des boîtes de liaison 4 comporte une étape de collage de longerons 6 des boîtes sur des blocs de fermeture des boîtes entre des premières et secondes plaques d'appui 5a, 5b formant des nervures de l'aile et de collage de traverses 7 formant des semelles des caissons.

Les longerons 6 des boîtes de liaison des caissons centraux sont des longerons composites, par exemple des panneaux sandwichs dont le rôle est de reprendre les efforts tranchants.

Selon l'exemple, les longerons 6 qui comportent des retours 6a sont d'abord collés sur les faces internes des blocs 52 puis les traverses sont collées sur les retours 6a des longerons et sur les tranches supérieure et inférieure des blocs 52.

Le collage des longerons peut être réalisé par drapage composite en L.

L'âme des panneaux sandwichs de réalisation des longerons 6 est une mousse en PVC, polystyrène, polyuréthane ou du balsa d'épaisseur inférieure à 30mm si possible. Les peaux de ces panneaux sandwichs sont des tissus de biaxes verre ou carbone, l'épaisseur d'une peau étant inférieure à 2mm. Les longerons des caissons sont dimensionnés en statique et en stabilité.

Les traverses 7 des boîtes 4 sont des éléments de semelles des caissons centraux et sont préférablement des panneaux monolithiques.

Il s'agit de fibres de verre ou de carbone très majoritairement orientées à 0°, c'est-à-dire selon l'axe longitudinal de l'aile ou de la pale. Ces semelles reprennent les efforts de compression occasionnés par le serrage des tiges 3. Les semelles des caissons sont ainsi dimensionnées en statique, en stabilité, et en matage contre les flasques métalliques.

Les caissons comportant les plaques d'appui 5a, 5b, constituées des blocs 52 et des plaques externes 51, et les boîtes 4 peuvent être préfabriquées dans un outillage à part et assemblés au moyen des tiges de serrage. Le collage ultérieur des peaux de la pale sur les caissons est assuré par une colle époxy.

Selon la figure 4 le procédé de réalisation des tronçons comporte une étape de mise bout à bout des dispositifs de liaison constitués par les caissons centraux de jonction réalisés par les plaques externes 51, les blocs de fermeture 52 et les longerons 6 et traverses 7 des boîtes de liaison 4.

Pour assembler les caissons en vis a vis, les premières plaques d'appui 5a, plaques en vis a vis au bout des tronçons, sont mise en appui contre une cale centrale 13 puis on insère les tiges 3 et on met en compression les caissons par des moyens de serrage 14 en bout des tiges 3.

Certaines des tiges de serrage traversent les boîtes de liaison 4, d'autres sont à l'extérieur des boîtes de liaison.

Les plaques d'appui 5a, 5b étant munies de trous 10 de passage des tiges de serrage 3, ces dernières dépassent de chaque côté de l'assemblage pour disposer les moyens de serrage 14.

Les tiges 3 forment un réseau de tirants, le serrage de ces tirants sur les plaques d'appui 5b externes à l'assemblage mettant en compression les boîtes de liaison 4.

Les tiges 3 formant les tirants peuvent être métalliques ou en matériaux composites. Le nombre et la position des tirants ne sont pas figés mais il peut être considéré qu'une rigidité correcte de la liaison est obtenue avec 4 tirants à l'intérieur des boîtes et 4 tirants à l'extérieur des boîtes, deux côté bord d'attaque et deux côté bord de fuite.

Dans le cas de tirants métalliques, il s'agit de tiges métalliques filetées sur lesquelles sont vissés des écrous de serrage 14 comme représenté.

Dans le cas de tirants composites, il pourra s'agir de tubes en verre ou carbone époxy avec une majorité de fibres orientées à 0° pour reprendre les efforts de traction et de flexion. Ces tubes composites pourront être fabriqués via un procédé d'extrusion pour des raisons économiques. Des inserts métalliques filetés seront fixés aux extrémités des tubes composites afin de pouvoir assurer le serrage des tirants par des écrous.

L'effort de serrage appliqué est déterminé pour assurer la condition de non décollement des deux tronçons de pale, mais aussi la non plastification (ou la non rupture) des tirants métalliques ou composites.

Les tirants appuient sur les plaques externes formant des flasques fermant les caissons dans la direction longitudinale des tronçons.

Comme vu précédemment, les plaques externes 51 sont préférentiellement métalliques pour résister aux efforts de compression des tirants.

Ainsi la réalisation de l'aile comporte une étape de réalisation de dispositifs de liaison desdits tronçon sous forme de caissons centraux 2a, 2b, chacun des caissons étant pourvu d'une boîte de liaison tubulaire 4 et de plaques d'appui 5a, 5b entre lesquelles est reçu la boîte de liaison tubulaire puis assemblage de ces caissons reliés par une cale 13 et serrage des tiges 3.

Les figures 5A et 5B représentent des trous de visite sous des trappes ouvertes dans les panneaux sandwichs de la pale et qui permettent d'avoir accès aux écrous pour le serrage, pour le retrait des tiges après fabrication des tronçons, la réinsertion des tiges pour assembler les pales sur le site de production d'électricité lors de l'installation de l'éolienne et éventuellement le démontage des pales pour réparation.

Le démontage des tiges après polymérisation des tronçons est fait au moyen des trous de visite sous des trappes dans la peau de l'aile. Les trappes 20 sont des panneaux sandwichs fixés sur le profil aérodynamique de la pale via des inserts. Elles sont réalisées dans l'intrado ou l'extrado et visibles en figure 1.

Les figures 5A et 5B permettent de voir les tiges 3 et les écrous 14, la nervure 51 la semelle 9a et le longeron 9c de la poutre du tronçon.

De retour à la figure 1, une fois les caissons assemblés pour réaliser le dispositif de liaison des tronçons on construit les tronçons sur ce dispositif.

Selon l'exemple, les tronçons comportent au moins une poutre 9 en I en prolongement des caissons 2a, 2b du dispositif de liaison.

D'autres configurations sont possibles pour la poutre 9 dans le cadre de l'invention et notamment il est possible d'utiliser deux poutre ou une poutre en forme de longeron tubulaire appelée "sparbox" en Anglais.

Pour réaliser les tronçons, les peaux 8a, 8b des intrados et extrados des tronçons de l'aile sont collées sur les semelles de la poutre 9, sur les nervures 5a, 5b et sur les semelles des caissons formées par les traverses 7.

Le procédé de réalisation des ailes comporte une étape de collage d'une première peau 8a formant un premier des intrado ou extrado du tronçon de l'aile sur le dispositif de liaison et de collage de la première peau sur une semelle 9a assemblée avec un longeron 9c de la poutre 9 puis une étape de collage d'une seconde peau 8b formant le second des intrado ou extrado du tronçon de l'aile sur le dispositif de liaison, sur la première peau et sur une seconde semelle 9b collée sur le longeron 9c, les semelles 9a, 9b et le longeron 9c formant un élément de poutre de l'aile. Une fois l'aile assemblé, le procédé comporte une étape de polymérisation de l'aile dans un moule.

Une fois l'aile polymérisée, on démonte les tiges 3 et on sépare les tronçons par découpe de la cale 13 entre les premières plaques d'appui 5a.

Ceci permet de stocker et de transporter les tronçons séparés jusqu'au site d'installation de l'éolienne.

L'assemblage des tronçons d'ailes sur le site d'installation de l'éolienne comporte un étape de mise bout à bout des tronçons au niveau des dispositifs de liaison, insertion de tiges de serrage dans les nervures des dispositifs de liaison et serrage des tiges par des écrous en bout des tiges.

La pale complète est alors montée sur l'éolienne.

Le mode de réalisation représenté s'applique plus spécifiquement aux pales d'éoliennes mais l'invention s'applique à tout dispositif de liaison de tronçons par caissons et tirants, qu'il s'agisse de pales d'éoliennes, d'ailes d'avions ou de toute structures en tronçons.

## Revendications

1. - Dispositif de liaison de tronçons (1a, 1b) d'ailes telles que des pales d'éoliennes **caractérisé en ce qu'**il comporte, aux extrémités de chaque tronçon en regard, des caissons (2a, 2b) mis bout à bout et serrés l'un contre l'autre par des tiges de serrage (3), lesdits caissons comportant, pour chaque tronçon, une boîte de liaison tubulaire (4) reçue entre deux plaques d'appui (5a, 5b), lesdites plaques d'appui formant des nervures du tronçon.

2. - Dispositif de liaison selon la revendication 1 **caractérisé en ce que** les tiges de serrage traversent les boîtes de liaison (4) et les plaques d'appui (5a, 5b).

3. - Dispositif de liaison selon la revendication 1 ou 2 **caractérisé en ce que** les tiges (3) forment un réseau de tirants, le serrage de ces tirants sur les plaques d'appui (5a, 5b) mettant en compression les boîtes de liaison (4).

4. - Dispositif de liaison selon l'une quelconque des revendications 1 à 3 **caractérisé en ce que** les plaques d'appui (5a, 5b) sont conformées en nervures des tronçons d'ailes (1a, 1b).

5. - Dispositif de liaison selon l'une quelconque des revendications 1 à 4 **caractérisé en ce que** les caissons (2a, 2b) forment des entretoises des tronçons.

6. - Dispositif de liaison selon l'une quelconque des revendications précédentes **caractérisé en ce que** les boîtes de liaison tubulaires comportent des longerons (6) et des traverses (7) collés ensemble sur des blocs (52) de fermeture des boîtes de liaison, lesdits blocs formant, avec des plaques externes rigides (51), lesdites plaques d'appui (5a, 5b).

7. - Dispositif de liaison selon la revendication 6 **caractérisé en ce que** les longerons sont des longerons composites.

8. - Dispositif de liaison selon la revendication 6 ou 7 **caractérisé en ce que** les traverses des caissons sont des éléments de semelles des tronçons.

9. - Aile telle qu'une pale d'éolienne en plusieurs tronçons (1a, 1b) **caractérisé en ce qu'**elle comporte au moins un dispositif de liaison selon l'une quelconque des revendications précédentes.

10. - Aile telle qu'une pale d'éolienne en plusieurs tronçons comportant au moins un dispositif de liaison selon la revendication 8 **caractérisé en ce que** les peaux (8a, 8b) des intrados et extrados des tronçons de l'aile sont collées sur les semelles des tronçons.

11. - Aile selon la revendication 9 ou 10 **caractérisée en ce que** les tronçons comportent au moins une poutre en I (9a, 9b, 9c) en prolongement des caissons (2a, 2b) du dispositif de liaison.

12. - Procédé de réalisation de tronçons d'ailes telles que des pales d'éoliennes **caractérisé en ce qu'**il comporte pour chaque tronçon une étape de réalisation d'un dispositif de liaison desdits tronçon selon l'une quelconque des revendications 1 à 8 sous forme d'un caissons central (2a, 2b) de jonction à partir d'une boîte de liaison tubulaire (4) et de plaques d'appui (5a, 5b) entre lesquelles est reçu la boîte de liaison tubulaire.

13. - Procédé de réalisation de tronçons d'ailes selon la revendication 12 **caractérisé en ce qu'**il comporte une étape de perçage de trous (10) de passage de tiges de serrage dans les plaques d'appui et une étape de pose de tubes (15) de réception des tiges de serrage entre les plaques d'appui.

14. - Procédé de réalisation de tronçons d'ailes telles que des pales d'éoliennes selon la revendication 12 ou 13 **caractérisé en ce qu'**il comporte une étape de collage de longerons (6) des boîtes de liaison (4) sur des blocs (52) de fermeture des boîtes et de collage de traverses (7) formant des semelles des caissons.

15. - Procédé de réalisation de tronçons d'ailes selon la revendication 14 **caractérisé en ce qu'**il comporte une étape de mise bout à bout des dispositifs de liaison, les premières plaques d'appui étant mise en appui contre une cale centrale, une étape d'insertion des tiges (3) et de mise en compression des caissons par des moyens de serrage (14) en bout des tiges (3).

16. - Procédé de réalisation de tronçons d'ailes selon la revendication 14 ou 15 **caractérisé en ce qu'**on réalise les plaques d'appui par assemblage de plaques externes rigides (51) avec les blocs (52) de fermeture des boîtes.

17. - Procédé de réalisation de tronçons d'ailes selon l'une quelconque des revendications 12 à 16 **caractérisé en ce qu'**il comporte une étape de collage d'une première peau (8a) formant un premier des intrado ou extrado du tronçon de l'aile sur le dispositif de liaison et de collage de la première peau sur une première semelle (9a) assemblée avec un longeron (9c) et une étape de collage d'une seconde peau (8b) formant le second des intrado ou extrado du tronçon de l'aile sur le dispositif de liaison, sur la première peau et sur une seconde semelle (9b) collée sur le longeron (9c), les première et seconde semelles (9a, 9b) et le longeron (9c) formant un élément de poutre (9) de l'aile.

18. - Procédé de réalisation de tronçons d'ailes selon la revendication 17 **caractérisé en ce qu'**il comporte ensuite une étape de polymérisation de l'aile dans un moule.

19. - Procédé de réalisation de tronçons d'ailes selon la revendication 18 **caractérisé en ce qu'**il comporte un étape ultérieure de démontage des tiges (3) et de séparation des tronçons par découpe de la cale (13) entre les premières plaques d'appui (5a) pour stockage et transport des tronçons séparés.

20. - Procédé d'assemblage de tronçons d'ailes réalisés selon le procédé des revendications 13 à 19 **caractérisé en ce qu'**il comporte un étape de mise bout à bout des tronçons au niveau des dispositifs de liaison, insertion de tiges de serrage dans les plaques d'appui des dispositifs de liaison et serrage des tiges par des écrous en bout des tiges.

## Patentansprüche

1. - Vorrichtung zur Verbindung von Abschnitten (1a, 1b) von Flügeln wie beispielsweise Windkraftanlagen-Blättern, **dadurch gekennzeichnet, dass** sie an den Enden jedes gegenüberliegenden Abschnitts Kästen (2a, 2b) aufweist, die durch Spannstangen (3) aneinandergefügt und aneinandergedrückt sind, wobei die Kästen für jeden Abschnitt einen rohrförmigen Verbindungskasten (4) aufweisen, der zwischen zwei Druckplatten (5a, 5b) aufgenommen ist, wobei die Druckplatten Rippen des Abschnitts bilden.

2. - Vorrichtung zur Verbindung nach Anspruch 1, **dadurch gekennzeichnet, dass** die Spannstangen durch die Verbindungskästen (4) und die Druckplatten (5a, 5b) hindurchgehen.

3. - Vorrichtung zur Verbindung nach Anspruch 1 oder 2, **dadurch gekennzeichnet, dass** die Stangen (3) ein Netzwerk von Zugelementen bilden, wobei das Einspannen dieser Zugelemente an den Druckplatten (5a, 5b) die Verbindungskästen (4) zusammendrückt.

4. - Vorrichtung zur Verbindung nach einem der Ansprüche 1 bis 3, **dadurch gekennzeichnet, dass** die Druckplatten (5a, 5b) als Rippen der Flügelabschnitte (1a, 1b) ausgebildet sind.

5. - Vorrichtung zur Verbindung nach einem der Ansprüche 1 bis 4, **dadurch gekennzeichnet, dass** die Kästen (2a, 2b) Zwischenstücke der Abschnitte bilden.

6. - Vorrichtung zur Verbindung nach einem der vorhergehenden Ansprüche, **dadurch gekennzeichnet, dass** die rohrförmigen Verbindungskästen Längsträger (6) und Querträger (7) aufweisen, die zusammen auf Schließblöcke (52) der Verbindungskästen geklebt sind, wobei die Blöcke mit steifen Außenplatten (51) die Druckplatten (5a, 5b) bilden.

7. - Vorrichtung zur Verbindung nach Anspruch 6, **dadurch gekennzeichnet, dass** die Längsträger Verbundlängsträger sind.

8. - Vorrichtung zur Verbindung nach Anspruch 6 oder 7, **dadurch gekennzeichnet, dass** die Querträger der Kästen Belagelemente der Abschnitte sind.

9. - Flügel wie beispielsweise ein Windkraftanlagen-Blatt aus mehreren Abschnitten (1a, 1b), **dadurch gekennzeichnet, dass** er mindestens eine Vorrichtung zur Verbindung nach einem der vorhergehenden Ansprüche aufweist.

10. - Flügel wie beispielsweise ein Windkraftanlagen-Blatt aus mehreren Abschnitten, der mindestens eine Vorrichtung zur Verbindung nach Anspruch 8 aufweist, **dadurch gekennzeichnet, dass** die Häute (8a, 8b) der Vorder- und Rückseiten der Flügelabschnitte auf die Beläge der Abschnitte geklebt sind.

11. - Flügel nach Anspruch 9 oder 10, **dadurch gekennzeichnet, dass** die Abschnitte mindestens einen I-Träger (9a, 9b, 9c) als Verlängerung der Kästen (2a, 2b) der Vorrichtung zur Verbindung aufweisen.

12. - Verfahren zur Herstellung von Flügelabschnitten wie beispielsweise Windkraftanlagen-Blättern, **dadurch gekennzeichnet, dass** es für jeden Abschnitt einen Herstellungsschritt einer Vorrichtung zur Verbindung der Abschnitte nach einem der Ansprüche 1 bis 8 in Form eines mittleren Kastens (2a, 2b) zur Verbindung ab einem rohrförmigen Verbindungskasten (4) und Druckplatten (5a, 5b) enthält, zwischen denen der rohrförmige Verbindungskasten aufgenommen ist.

13. - Verfahren zur Herstellung von Flügelabschnitten nach Anspruch 12, **dadurch gekennzeichnet, dass** es einen Schritt des Bohrens von Durchgangslöchern (10) für Spannstangen in den Druckplatten und einen Schritt des Anbringens von Aufnahmeröhren (15) der Spannstangen zwischen den Druckplatten enthält.

14. - Verfahren zur Herstellung von Flügelabschnitten wie beispielsweise Windkraftanlagen-Blättern nach Anspruch 12 oder 13, **dadurch gekennzeichnet, dass** es einen Schritt des Klebens von Längsträgern (6) der Verbindungskästen (4) auf Schließblöcke (52) der Kästen und des Klebens von Querträgern (7) enthält, die Beläge der Kästen bilden.

15. - Verfahren zur Herstellung von Flügelabschnitten nach Anspruch 14, **dadurch gekennzeichnet, dass** es einen Schritt des Aneinanderfügens der Vorrichtungen zur Verbindung, wobei die ersten Druckplatten gegen ein mittleres Distanzstück gedrückt werden, einen Schritt des Einfügens der Stangen (3) und des Zusammendrückens der Kästen mittels Spannmitteln (14) an den Enden der Stangen (3) enthält.

16. - Verfahren zur Herstellung von Flügelabschnitten nach Anspruch 14 oder 15, **dadurch gekennzeichnet, dass** die Druckplatten durch Montage steifer Außenplatten (51) mit den Schließblöcken (52) der Kästen hergestellt werden.

17. - Verfahren zur Herstellung von Flügelabschnitten nach einem der Ansprüche 12 bis 16, **dadurch gekennzeichnet, dass** es einen Schritt des Klebens einer ersten Haut (8a), die ein erstes von Vorder- oder Rückseite des Flügelabschnitts auf der Vorrichtung zur Verbindung bildet, und des Klebens der ersten Haut auf einen ersten Belag (9a), montiert mit einem Längsträger (9c), und einen Schritt des Klebens einer zweiten Haut (8b), die das zweite von Vorder- oder Rückseite des Flügelabschnitts auf der Vorrichtung zur Verbindung bildet, auf die erste Haut und auf einen zweiten Belag (9b), der auf den Längsträger (9c), den ersten und den zweiten Belag (9a, 9b) und den Längsträger (9c), der ein Trägerelement (9) des Flügels bildet, enthält.

18. - Verfahren zur Herstellung von Flügelabschnitten nach Anspruch 17, **dadurch gekennzeichnet, dass** es anschließend einen Schritt der Polymerisation des Flügels in einer Form enthält.

19. - Verfahren zur Herstellung von Flügelabschnitten nach Anspruch 18, **dadurch gekennzeichnet, dass** es einen späteren Schritt des Demontierens der Stangen (3) und des Trennens der Abschnitte durch Zerschneiden des Distanzstücks (13) zwischen den ersten Druckplatten (5a) für Lagerung und Transport der separaten Abschnitte enthält.

20. - Verfahren zur Montage von Flügelabschnitten, hergestellt nach dem Verfahren der Ansprüche 13 bis 19, **dadurch gekennzeichnet, dass** es einen Schritt des Aneinanderfügens der Abschnitte an den Vorrichtungen zur Verbindung, des Einführens der Spannstangen in die Druckplatten der Vorrichtungen zur Verbindung und des Einspannens der Stangen durch Muttern am Ende der Stangen enthält.

## Claims

1. - Device for connecting sections (1a, 1b) of wings such as wind turbine blades, **characterized in that** it has, at the ends of each adjacent section, box structures (2a, 2b) that are placed end-to-end and are clamped together by clamping rods (3), said box structures having, for each section, a tubular connecting box (4) received between two bearing plates (5a, 5b), said bearing plates forming ribs of the section.

2. - Connecting device according to Claim 1, **characterized in that** the clamping rods pass through the connecting boxes (4) and the bearing plates (5a, 5b).

3. - Connecting device according to Claim 1 or 2, **characterized in that** the rods (3) form an array of tie rods, the clamping of these tie rods to the bearing plates (5a, 5b) putting the connecting boxes (4) under compression.

4. - Connecting device according to any one of Claims 1 to 3, **characterized in that** the bearing plates (5a, 5b) are shaped as ribs of the wing sections (1a, 1b).

5. - Connecting device according to any one of Claims 1 to 4, **characterized in that** the box structures (2a, 2b) form spacers of the sections.

6. - Connecting device according to any one of the preceding claims, **characterized in that** the tubular connecting boxes have spars (6) and cross-beams (7) that are all adhesively bonded to closing blocks (52) of the connecting boxes, said blocks forming, together with rigid external plates (51), said bearing plates (5a, 5b).

7. - Connecting device according to Claim 6, **characterized in that** the spars are composite spars.

8. - Connecting device according to Claim 6 or 7, **characterized in that** the cross-beams of the box structures are flange elements of the sections.

9. - Wing, such as a wind turbine blade, made of a number of sections (1a, 1b), **characterized in that** it has at least one connecting device according to any one of the preceding claims.

10. - Wing, such as a wind turbine blade, made of a plurality of sections, having at least one connecting device according to Claim 8, **characterized in that** the skins (8a, 8b) of the lower surface and upper surface of the sections of the wing are adhesively bonded to the flanges of the sections.

11. - Wing according to Claim 9 or 10, **characterized in that** the sections have at least one I-beam (9a, 9b, 9c) extending the box structures (2a, 2b) of the connecting device.

12. - Method for producing sections of wings such as wind turbine blades, **characterized in that** it comprises, for each section, a step of producing a device for connecting said sections according to any one of Claims 1 to 8 in the form of a central joining box structure (2a, 2b) from a tubular connecting box (4) and bearing plates (5a, 5b), between which the tubular connecting box is received.

13. - Method for producing wing sections according to Claim 12, **characterized in that** it comprises a step of drilling through-holes (10) for clamping rods in the bearing plates and a step of positioning tubes (15) for receiving the clamping rods between the bearing plates.

14. - Method for producing sections of wings such as wind turbine blades according to Claim 12 or 13, **characterized in that** it comprises a step of adhesively bonding spars (6) of the connecting boxes (4) to closing blocks (52) of the boxes and of adhesively bonding cross-beams (7) that form flanges of the box structures.

15. - Method for producing wing sections according to Claim 14, **characterized in that** it comprises a step of placing the connecting devices end-to-end, the first bearing plates being pressed against a central packing piece, a step of inserting the rods (3) and of putting the box structures under compression by way of clamping means (14) at the ends of the rods (3).

16. - Method for producing wing sections according to Claim 14 or 15, **characterized in that** the bearing plates are produced by assembling rigid external plates (51) with the closing blocks (52) of the boxes.

17. - Method for producing wing sections according to any one of Claims 12 to 16, **characterized in that** it comprises a step of adhesively bonding a first skin (8a), forming a first of the lower surface or upper surface of the section of the wing, to the connecting device and of adhesively bonding the first skin to a first flange (9a) assembled with a spar (9c), and a step of adhesively bonding a second skin (8b), forming the second of the lower surface or upper surface of the section of the wing, to the connecting device, to the first skin and to a second flange (9b) adhesively bonded to the spar (9c), the first and second flanges (9a, 9b) and the spar (9c) forming a beam element (9) of the wing.

18. - Method for producing wing sections according to Claim 17, **characterized in that** it then comprises a step of polymerizing the wing in a mold.

19. - Method for producing wing sections according to Claim 18, **characterized in that** it comprises a final step of removing the rods (3) and separating the sections by cutting the packing piece (13) between the first bearing plates (5a) in order to store and transport the separated sections.

20. - Method for assembling wing sections produced by the method in Claims 13 to 19, **characterized in that** it comprises a step of placing the sections end-to-end in the region of the connecting devices, inserting clamping rods into the bearing plates of the connecting devices and clamping the rods by way of nuts at the ends of the rods.
